# EUROPÄISCHE PATENTSCHRIFT

(11) **EP 0 552 199 B1**
(45) Veröffentlichungstag und Bekanntmachung des Hinweises auf die Patenterteilung: **08.06.1994**
(21) Anmeldenummer: 91917412.8
(22) Anmeldetag: 04.10.1991
(51) Int. Cl.: B65G 17/42, B65G 19/24

(54) **ANORDNUNG ZUM VERBINDEN EINES FÖRDERORGANES MIT EINEM RUNDSTAHLKETTENGLIED**
DEVICE FOR CONNECTING A CONVEYOR UNIT TO A LINK OF A ROUND STEEL CHAIN
DISPOSITIF D'ASSEMBLAGE D'UN ORGANE DE TRANSPORT AVEC UN MAILLON DE CHAINE EN ACIER ROND

(30) Priorität: 08.10.1990 DE 4032194
(43) Veröffentlichungstag der Anmeldung: 28.07.1993
(73) Patentinhaber: RUD-KETTENFABRIK RIEGER & DIETZ GMBH U. CO., 73432 Aalen (DE)
(72) Erfinder: DALFERTH, Hans, D-7080 Aalen-Wasseralfingen (DE); BOGDAN, Zvonimir, D-7080 Aalen (DE); ZENKER, Hartwig, D-73432 Aalen (DE)
(74) Vertreter: Böning, Manfred, Dr.-Ing.
(86) Internationale Anmeldenummer: DE9100793
(87) Internationale Veröffentlichungsnummer: WO9206023

(56) Entgegenhaltungen:
- EP-A- 0 367 755
- DE-B- 1 075 496

## Beschreibung

Die Erfindung betrifft eine Anordnung zum Verbinden eines Förderorganes, insbesondere eines Bechers mit einem Anschlußglied einer Rundstahlkette, bei der der dem Förderorgan zugewandte Längsschenkel des Anschlußkettengliedes zwischen sich über den größten Teil der Länge des Längsschenkels erstreckenden Haltemulden zweier miteinander verschraubter Kupplungselemente festklemmbar ist, welch letztere Füße mit parallel zu den Längsachsen des Anschlußkettengliedes und senkrecht zu einer durch diese Längsachsen verlaufenden Ebene angeordneten Grundflächen aufweisen.

Aus der EP-A-0 367 755 ist eine Anordnung der vorstehenden Art mit als Klemmteile bezeichneten Kupplungselementen bekannt, deren zylindrische Haltemulden die ihnen zugewandten, ebenfalls zylindrischen Umfangsflächen der Längsschenkel des jeweiligen Anschlußkettengliedes umgreifen. Zum Verbinden der Kupplungselemente mit dem Förderorgan dienen bei dieser Anordnung u.a. Anschlußmittel in Form jeweils eines Fußes, dessen Grundfläche mit ihrem Zentrum einerseits im Bereich einer durch die beiden Längsschenkel des Anschlußkettengliedes verlaufenden sogenannten Hauptebene liegt und andererseits bezüglich einer senkrecht zu dieser Hauptebene und zu den Längsschenkeln des Anschlußkettengliedes verlaufenden sogenannten Gliedmittenebene versetzt angeordnet ist. Durch die bei der bekannten Konstruktion unabdingbare gekröpfte Ausbildung der Füße der Kupplungselemente läßt sich in Fällen, in denen beide Kupplungselemente mit dem Förderorgan verbunden sind, eine fluchtende Anordnung der Füße der Kupplungselemente im Bereich der vorerwähnten Hauptebene des Anschlußkettengliedes erreichen, dies allerdings auf Kosten der Größe der Grundfläche der Füße. Die Abmessungen der Grundfläche der Füße sind insbesondere dann von größerer Bedeutung als allgemein angenommen wird, wenn nur eines der Kupplungselemente zwecks Vermeidung von Verspannungen mit dem Förderorgan verbunden ist. Der Grund hierfür besteht darin, daß mit zunehmender Größe der Grundfläche auch die Steifigkeit der Anordnung zunimmt.

Der Erfindung liegt die Aufgabe zugrunde, eine Anordnung der in Betracht gezogenen Art zu schaffen, die sich durch eine große Steifigkeit der Verbindungsstelle auszeichnet und bei der der Fuß der am Förderorgan befestigten Kupplungselemente die ihm zugeordnete Wand des Förderorganes in einer Weise abstützt, die es gestattet, die Wandstärke der Förderelemente vergleichsweise gering zu halten. Diese Aufgabe wird erfindungsgemäß dadurch gelöst, daß lediglich eines der Kupplungselemente im Bereich seines sich mit seiner Grundfläche am Förderorgan abstützenden Fußes mit dem Förderorgan verbunden ist und daß die Kupplungselemente einschließlich der Grundflächen ihrer Füße auf sich gegenüberliegenden Seiten der durch die Mitten der Längsschenkel der von ihnen erfaßten Anschlußkettenglieder verlaufenden Ebene angeordnet sind und die Länge der Grundfläche mindestens des Fußes des mit dem Förderorgan verbundenen Kupplungselementes mindestens gleich der Teilung des Anschlußkettengliedes ist.

Die erfindungsgemäße Anordnung eignet sich im Hinblick auf ihre große Stabilität in hohem Maße für den Einsatz bei Becherwerken mit hoher Förderleistung. Dadurch, daß die Abstützung der Förderorgane an den Kupplungselementen auf einer Länge erfolgt, die mindestens gleich der Länge der Haltemulden ist, lassen sich ungeachtet der Tatsache, daß zwecks Vermeidung von Verspannungen nur ein Kupplungselement eines Kupplungselementpaares mit dem Förderorgan fest verbunden ist, erhebliche Kippmomente, wie sie beispielsweise beim Schöpfen schweren Gutes mit Bechern auftreten können, problemlos meistern.

Weitere Einzelheiten und Merkmale der Erfindung ergeben sich aus den Unteransprüchen und der nachfolgenden Beschreibung eines bevorzugten Ausführungsbeispieles sowie zweier Modifikationen. Es zeigen:
- Fig. 1: eine schematische Teilseitenansicht eines Becherwerkes, bei dem Becher unter Nutzung der erfindungsgemäßen Anordnung mit einem Kettenstrang verbunden sind,
- Fig. 2: eine der Anordnungen gemäß Fig. 1 im Detail,
- Fig. 3: einen Schnitt längs der Linie III-III in Fig. 2,
- Fig. 4: die Innenseite eines Kupplungselementes der Anordnung gemäß den Figuren 2 und 3,
- Fig. 5: einen Schnitt längs der Linie V-V in Fig. 4,
- Fig. 6: einen Schnitt längs der Linie VI-VI in Fig. 4,
- Fig. 7: die Draufsicht auf die Grundfläche eines Kupplungselementes gemäß den Figuren 2 bis 6,
- Fig. 8: in vergrößertem Maßstab die Anlageverhältnisse zwischen einem Kupplungselement und dem Längsschenkel eines Anschlußkettengliedes,
- Fig. 9: eine der Fig. 2 entsprechende Ansicht eines modifizierten Ausführungsbeispiels und
- Fig. 10: die Seitenansicht eines durch eine modifizierte Anordnung mit einem Becher verbundenen Anschlußkettengliedes.

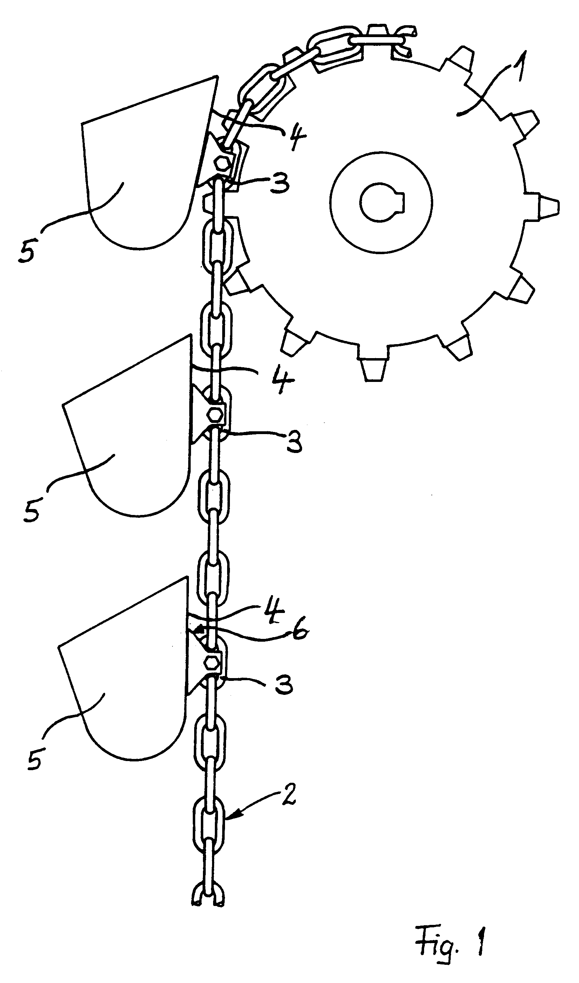

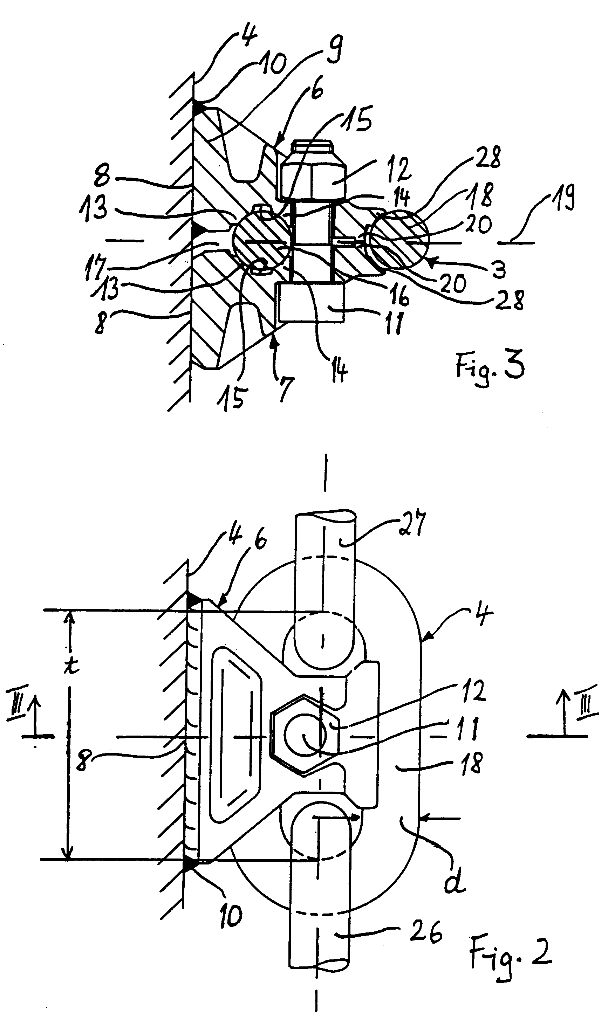

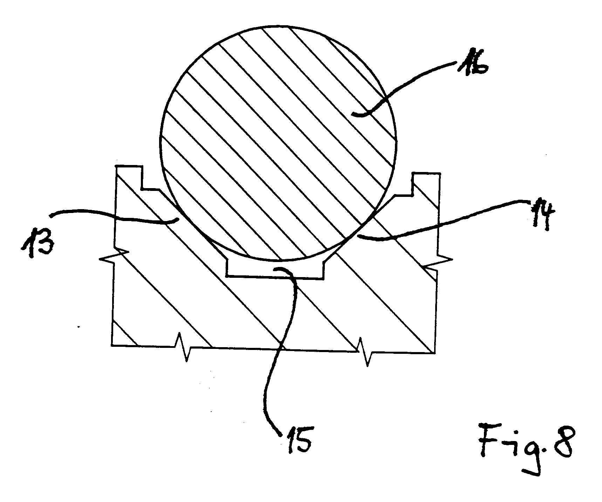

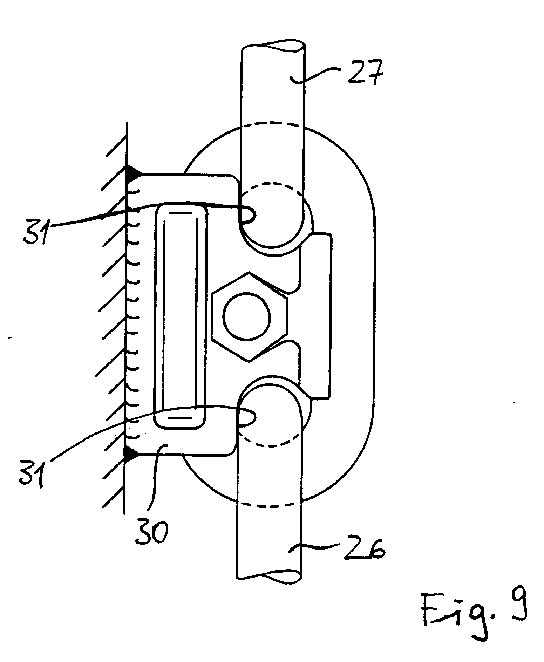

Figur 1 zeigt einen der beiden durch jeweils ein Zahnkettenrad l angetriebenen Kettenstränge 2 eines Zweistrang-Kettenförderers. Jeder Kettenstrang 2 weist vertikale, d.h. das Zahnkettenrad l stehend passierende Anschlußkettenglieder 3 auf, mit denen über Anordnungen der in den Figuren 2 bis 8 dargestellten Art die Rückwände 4 von als Becher ausgebildeten Förderorganen 5 verbunden sind.

Zu jeder Verbindungsanordnung gehören zwei Kupplungselemente 6 und 7, die aus Wirtschaftlichkeitsgründen die gleiche Form und Größe haben. Die beiden Kupplungselemente 6 und 7 liegen mit einer großdimensionierten Grundfläche 8 ihres Fußes 9 gegen die Rückwand 4 eines Bechers 5 an. Das Kupplungselement 6 - und nur dieses - ist durch eine umlaufende Schweißnaht 10 fest mit der Rückwand 4 des Bechers 5 verbunden, während das Kupplungselement 7 mittels einer Schraube 11 und einer selbstsichernden Mutter 12 am Kupplungselement 6 befestigt ist. Aufgrund der Schraubverbindung 11,12 ist es möglich, jeweils zwei als äquidistante, der Form der Anschlußkettenglieder 3 angepaßte Stege ausgebildete Vorsprünge 13,14 von Haltemulden 15 fest gegen den der Rückwand 4 zugewandten Längsschenkel 16 des jeweiligen Anschlußkettengliedes 3 zu pressen, d.h. diesen Längsschenkel 16 zwischen den Kupplungselementen 6, 7 festzuklemmen. Durch die paarweise angeordneten, stegartigen Vorsprünge 13,14 wird der Längsschenkel 16 prismatisch abgestützt und unabhängig von Kettentoleranzen sicherer gehalten als bei Verwendung von halbrunden oder rechteckförmigen Haltemulden. Die die Vorsprünge 13,14 bildenden Stege begünstigen mit anderen Worten die Kraftübertragung von nur einem Längsschenkel 16 der Anschlußkettenglieder 3 auf die Becher 5. Der gleichen Zielsetzung dienen die großdimensionierten, symmetrisch angeordneten Grundflächen 8 der Kupplungselemente 6,7, die die Rückwände 4 der Becher 5 im Bereich der Kraftübertragung stabilisieren. Die Länge L der Grundfläche 8 sollte mindestens so groß sein wie die mittlere Länge lₗ der Haltemulden 15, vorzugsweise aber sogar größer als die Teilung t der Anschlußkettenglieder 3, während die Breite B mindestens gleich der Dicke d der Längsschenkel der Anschlußkettenglieder 3, besser aber gleich oder größer als deren 1,5-fache Dicke d sein sollte.

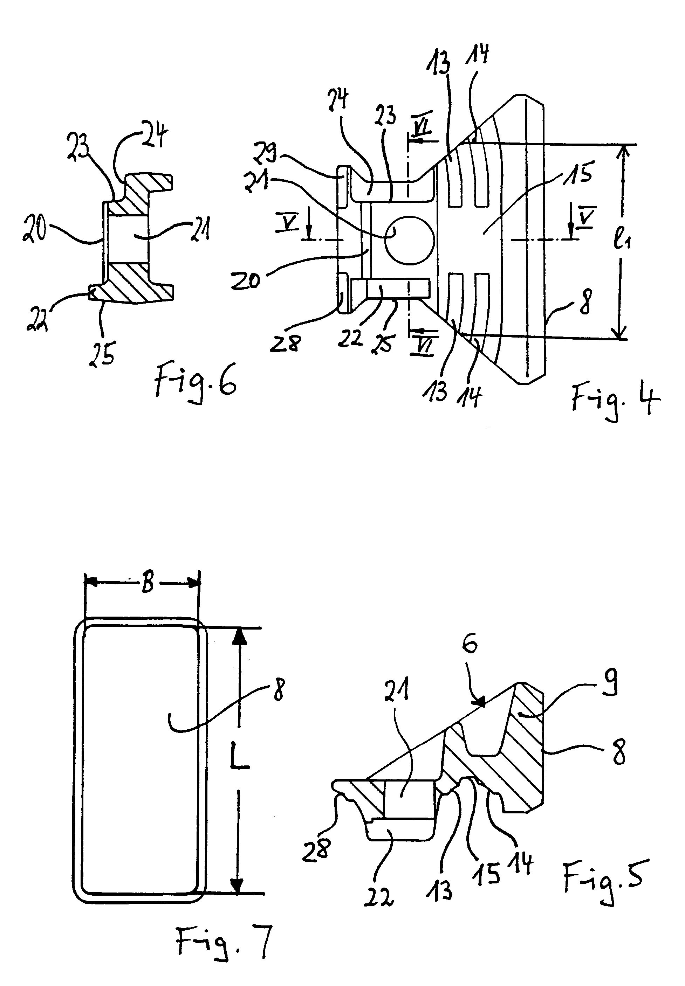

Der Zwischenraum 17 zwischen den der Rückwand 4 zugewandten Füßen 9 der auf sich gegenüberliegenden Seiten einer durch die Mitten der Längsschenkel 16 und 18 der Anschlußkettenglieder 3 verlaufenden Ebene 19 angeordneten Kupplungselemente 6 und 7 sollte klein, aber ausreichend groß sein, um Berührungen der Kupplungselemente 6 und 7 in diesem Bereich zu verhindern. Eine direkte Berührung zwischen den Kupplungselementen 6 und 7 findet lediglich im Bereich zweier Vorsprünge 20 statt, von denen jeweils einer an einem der Kupplungselemente 6,7 angeordnet ist. Die Vorsprünge 20 sind wie die Vorsprünge 13 und 14 steg- bzw. rippenartig ausgebildet und verlaufen parallel zur Längsachse 32 der Anschlußkettenglieder 3. Dadurch, daß die stegartigen Vorsprünge 13,14 im Bereich der Mitte der Haltemulden 15, wie aus Figur 4 ersichtlich, unterbrochen sind, kommt es zu einer Art 3-Punkt-Abstützung der Kupplungselemente 6,7 im geklemmten Zustand, d.h. ein einwandfreier statisch bestimmter Sitz der Kupplungselemente 6,7 in der Klemmstellung ist gewährleistet. Dabei erweist es sich als günstig, wenn die Vorsprünge 20 in unmittelbarer Nähe des dem Becher 5 abgewandten Längsschenkels 18 des Anschlußkettengliedes 3 angeordnet sind, d.h. wenn sie einen Abstand zur Bohrung 21 für die Schraube 11 aufweisen.

Um lastbedingte Relativbewegungen der Kupplungselemente 6,7 in Längsrichtung der Haltemulden 15 zu verhindern und die Schraube 11 vor Scherbeanspruchungen zu schützen, ist jedes der Kupplungselemente 6,7 mit jeweils einem Anschlagsteg 22 versehen, der gegen die Wand 23 einer Aussparung 24 am jeweils anderen Kupplungselement zur Anlage kommt. Die Außenseiten 25 der Anschlagstege 22 können dabei gleichzeitig als Prallflächen für die Scheitel der in die Anschlußkettenglieder 3 jeweils eingehängten horizontalen Kettenglieder 26,27 genutzt werden.

Wie weiter oben bereits ausgeführt, erfolgt die Kraftübertragung vom Kettenstrang 2 auf die Förderorgane einzig und allein über den dem Förderorgan 5 zugewandten Längsschenkel 16, wobei die stegartigen Vorsprünge 13,14 in gleicher Weise wie die große Grundfläche 8 und die der Größe dieser Grundfläche entsprechend lange Schweißnaht 10 trotz des "Ein-Schenkel-Anschlusses" die Übertragung großer Kräfte ermöglichen. Der dem Förderorgan 5 abgewandte Längsschenkel 18 wird im Hinblick auf das zuvor Gesagte lediglich bei der Montage zu Justierzwecken genutzt. Er liegt im montierten Zustand gegen eine der Justierrippen 28,29 eines Justierrippenpaares an.

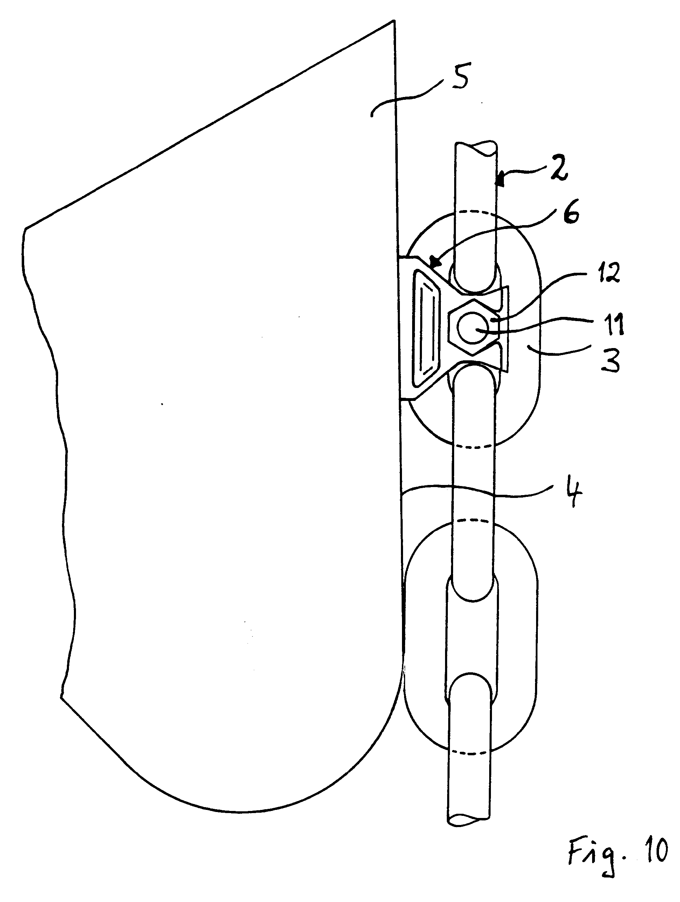

Figur 9 zeigt ein Ausführungsbeispiel, dessen Aufbau im wesentlichen dem Aufbau der Anordnung gemäß den Figuren 1 bis 8 entspricht. Der einzige erwähnenswerte Unterschied zwischen der zuvor beschriebenen Konstruktion und der Anordnung gemäß Figur 9 besteht darin, daß bei der Anordnung gemäß Figur 9 Kupplungselemente 30 mit Stützflächen 31 verwendet werden, gegen die sich die in das Anschlußkettenglied 3 eingehängten Kettenglieder 26,27 mit ihren Bugbereichen abstützen können, um zur Aufnahme von Kippmomenten beizutragen.

In Figur 10 schließlich ist eine Anordnung dargestellt, die sich von der Anordnung gemäß den Figuren 1 bis 8 nur dadurch unterscheidet, daß die auch hier im wesentlichen rechteckigen Grundflächen 8 der Kupplungselemente 6,7 eine leichte Schräglage gegenüber der Längsachse der Haltemulden 15 bzw. des Kettenstranges 2 einnehmen. Durch diese Maßnahme läßt sich ebenfalls eine zusätzliche Momentenabstützung erreichen.

## Patentansprüche

1. Anordnung zum Verbinden eines Förderorganes (5), insbesondere eines Bechers mit einem Anschlußglied (3) einer Rundstahlkette (2), bei der der dem Förderorgan (5) zugewandte Längsschenkel (16) des Anschlußkettengliedes (3) zwischen sich über den größten Teil der Länge des Längsschenkels (16) erstreckenden Haltemulden (15) zweier miteinander verschraubter Kupplungselemente (6,7) festklemmbar ist, welch letztere Füße (9) mit parallel zu den Längsachsen des Anschlußkettengliedes (3) und senkrecht zu einer durch diese Längsachsen verlaufenden Ebene angeordneten Grundflächen (8) aufweisen, dadurch **gekennzeichnet**, daß lediglich eines der Kupplungselemente im Bereich seines sich mit seiner Grundfläche (8) am Förderorgan (5) abstützenden Fußes (9) mit dem Förderorgan verbunden ist und daß die Kupplungselemente (6,7) einschließlich der Grundflächen (8) ihrer Füße (9) auf sich gegenüberliegenden Seiten der durch die Mitten der Längsschenkel (16,18) der von ihnen erfaßten Anschlußkettenglieder (3) verlaufenden Ebene (19) angeordnet sind und die Länge (L) der Grundfläche (8) mindestens des Fußes (9) des mit dem Förderorgan (5) verbundenen Kupplungselementes (6,7) mindestens gleich der Teilung (t) des Anschlußkettengliedes (3) ist.

2. Anordnung nach Anspruch 1, dadurch gekennzeichnet, daß die größte Breite (B) der Grundfläche (8) mindestens des Fußes (9) des mit dem Förderorgan (5) verbundenen Kupplungselementes (6,7) gleich der Dicke (d) des Anschlußkettengliedes (3) ist.

3. Anordnung nach Anspruch 1, dadurch gekennzeichnet, daß die größte Breite (B) der Grundfläche (8) mindestens des Fußes (9) des mit dem Förderorgan (5) verbundenen Kupplungselementes (6,7) gleich der 1,5-fachen Dicke (d) des Anschlußkettengliedes (3) ist.

4. Anordnung nach einem der Ansprüche 1 bis 3, dadurch gekennzeichnet, daß der Fuß (9) des mit dem Förderorgan (5) verbundenen Kupplungselementes (6,7) im Bereich des Randes seiner Grundfläche (8) mit dem Förderorgan (5) durch eine durchgehende oder unterbrochene Schweißnaht (10) verbunden ist.

5. Anordnung nach einem der Ansprüche 1 bis 4, dadurch gekennzeichnet, daß die Abmessungen der Grundflächen (8) der einem Anschlußglied (3) zugeordneten Kupplungselemente (6,7) gleich sind.

6. Anordnung nach einem der Ansprüche 1 bis 5, dadurch gekennzeichnet, daß die Grundflächen (8) der Kupplungselemente (6,7) in einer Ebene, die senkrecht zur durch die Mitten der Langsschenkel (16,18) des Anschlußkettengliedes (3) verlaufenden Ebene verlauft, einen Abstand voneinander haben.

7. Anordnung nach einem der Ansprüche 1 bis 6, dadurch gekennzeichnet, daß die Grundflächen (8) der Kupplungselemente (6,7) eine leichte Schräglage gegenüber der Längsachse der Haltemulden (15) einnehmen.

8. Anordnung nach einem der Ansprüche 1 bis 7, dadurch gekennzeichnet, daß die Kupplungselemente (6,7) sich über Vorsprünge (13,14) am dem Förderorgan (5) zugewandten Längsschenkel (16) des Anschlußkettengliedes (3) abstützen.

9. Anordnung nach Anspruch 8, dadurch gekennzeichnet, daß die Haltemulden (15) mit zwei in Muldenlängsrichtung verlaufenden äquidistanten, steg- bzw. rippenartigen Vorsprüngen (13,14) versehen sind.

10. Anordnung nach Anspruch 9, dadurch gekennzeichnet, daß die steg- bzw. rippenartigen Vorsprünge (13,14) im Bereich der Haltemuldenmitte unterbrochen sind.

11. Anordnung nach einem der Ansprüche 1 bis 10, dadurch gekennzeichnet, daß die Kupplungselemente (6,7) sich außerhalb des Bereiches der Haltemulden (15) über mindestens einen weiteren Vorsprung (20) gegeneinander abstützen.

12. Anordnung nach Anspruch 11, dadurch gekennzeichnet, daß der außerhalb des Bereiches der Haltemulden (15) angeordnete Vorsprung (20) steg- bzw. rippenartig ausgebildet ist.

13. Anordnung nach Anspruch 12, dadurch gekennzeichnet, daß der außerhalb des Bereiches der Haltemulden (15) angeordnete Vorsprung (20) parallel zur Längsachse des Anschlußkettengliedes (3) verläuft.

14. Anordnung nach einem der Ansprüche 11 bis 13, dadurch gekennzeichnet, daß der außerhalb des Bereiches der Haltemulden (15) angeordnete Vorsprung (20) in unmittelbarer Nähe des dem Förderorgan (5) abgewandten Längsschenkels (18) des Anschlußkettengliedes (3) angeordnet ist.

15. Anordnung nach einem der Ansprüche 11 bis 14, dadurch gekennzeichnet, daß der zur Abstützung der Kupplungselemente (6,7) gegeneinander dienende Vorsprung (20) einen Abstand von der Bohrung (21) für die Schraube (11) der Schraubverbindung der Kupplungselemente (6,7) einnimmt.

16. Anordnung nach einem der Ansprüche 1 bis 15, dadurch gekennzeichnet, daß die Kupplungselemente (6,7) mit lastbedingte Relativbewegungen in Längsrichtung der Haltemulden (15) zwischen ihnen verhindernden Anschlagstegen (22) versehen sind.

17. Anordnung nach Anspruch 16, dadurch gekennzeichnet, daß die Anschlagstege (22) Prallflächen für die Scheitel von in die Anschlußkettengliede (3) eingehängten Kettengliedern (26,27) bilden.

18. Anordnung nach einem der Ansprüche 1 bis 17, dadurch gekennzeichnet, daß die Kupplungselemente (30) mit Stützflächen (31) für Bugbereiche der in das Anschlußkettenglied (3) eingehängten Kettenglieder (26,27) versehen sind.

19. Anordnung nach einem der Ansprüche 1 bis 18, dadurch gekennzeichnet, daß die Kupplungselemente (6,7) zur Grobjustierung der Lage des Anscnlußkettengliedes (3) mit Justierrippen (28) für den dem Förderorgan (5) abgewandten Längsschenkel (18) des Anschlußkettengliedes (3) versehen sind.

20. Anordnung nach einem der Ansprüche 1 bis 19, dadurch gekennzeichnet, daß beide Kupplungselemente (6,7) identisch ausgebildet sind.

21. Anordnung nach einem der Ansprüche 1 bis 20, dadurch gekennzeichnet, daß die Grundflächen (8) beider Kupplungselemente (6,7) plan sind und gegen eine Wand (4) des jeweiligen Förderorganes (5) anliegen.

## Claims

1. Arrangement for joining a conveying member (5), especially a bucket, to a connecting link (3) of a round steel chain (2), in which that longitudinal arm (16) of the connecting chain link (3) which faces the conveying member (5) can be clamped between holding recesses (15), extending over the greatest part of the length of the longitudinal arm (16), of two screwed-together coupling elements (6, 7), which latter exhibit feet (9) having base surfaces (8) disposed parallel to the longitudinal axes of the connecting chain link (3) and perpendicular to a plane running through these longitudinal axes, characterized in that only one of the coupling elements is joined, in the region of its foot (9) supported by its base surface (8) on the conveying member (5), to the conveying member, and in that the coupling elements (6, 7), including the base surfaces (8) of their feet (9), are disposed on opposing sides of the plane (19) running through the middles of the longitudinal arms (16, 18) of the connecting chain links (3) grasped by the said coupling elements, and the length (L) of the base surface (8) of at least the foot (9) of the coupling element (6, 7) joined to the conveying member (5) is at least equal to the pitch (t) of the connecting chain link (3).

2. Arrangement according to Claim 1, characterized in that the greatest width (B) of the base surface (8) at least of the foot (9) of that coupling element (6, 7) which is joined to the conveying member (5) is equal to the thickness (d) of the connecting chain link (3).

3. Arrangement according to Claim 1, characterized in that the greatest width (B) of the base surface (8) at least of the foot (9) of that coupling element (6, 7) which is joined to the conveying member (5) is equal to 1.5 times the thickness (d) of the connecting chain link (3).

4. Arrangement according to one of Claims 1 to 3, characterized in that the foot (9) of that coupling element (6, 7) which is joined to the conveying member (5) is joined to the conveying member (5), in the region of the edge of its base surface (8), by a continuous or non-continuous weld seam (10).

5. Arrangement according to one of Claims 1 to 4, characterized in that the dimensions of the base surfaces (8) of the coupling elements (6, 7) assigned to a connecting link (3) are equal.

6. Arrangement according to one of Claims 1 to 5, characterized in that the base surfaces (8) of the coupling elements (6, 7), viewed in a plane perpendicular to the plane running through the middles of the longi- tudinal arms (16, 18) of the connecting chain link (3), are spaced apart.

7. Arrangement according to one of Claims 1 to 6, characterized in that the base surfaces (8) of the coupling elements (6, 7) assume a slight inclination relative to the longitudinal axis of the holding recesses (15).

8. Arrangement according to one of Claims 1 to 7, characterized in that the coupling elements (6, 7) are supported, by means of projections (13, 14), on that longitudinal arm (16) of the connecting chain link (3) which faces the conveying member (5).

9. Arrangement according to Claim 8, characterized in that the holding recesses (15) are provided with two equidistant, web-like or rib-like projections (13, 14) running in the longitudinal direction of the recesses.

10. Arrangement according to Claim 9, characterized in that the web-like or rib-like projections (13, 14) are interrupted in the region of the middle of the holding recess.

11. Arrangement according to one of Claims 1 to 10, characterized in that the coupling elements (6, 7) are mutually supported, outside the region of the holding recesses (15), by means of at least one further projection (20).

12. Arrangement according to Claim 11, characterized in that the projection (20) disposed outside the region of the holding recesses (15) is of web-like or rib-like configuration.

13. Arrangement according to Claim 12, characterized in that the projection (20) disposed outside the region of the holding recesses (15) runs parallel to the longitudinal axis of the connecting chain link (3).

14. Arrangement according to one of Claims 11 to 13, characterized in that the projection (20) disposed outside the region of the holding recesses (15) is disposed in direct proximity to that longitudinal arm (18) of the connecting chain link (3) which faces away from the conveying member (5).

15. Arrangement according to one of Claims 11 to 14, characterized in that the projection (20) serving to support the coupling elements (6, 7) against each other assumes a distance from the bore (21) for the screw (11) of the screw connection of the coupling elements (6, 7).

16. Arrangement according to one of Claims 1 to 15, characterized in that the coupling elements (6, 7) are provided with stop webs (22) which inhibit load-dependent relative movements between said coupling elements in the longitudinal direction of the holding recesses (15).

17. Arrangement according to Claim 16, characterized in that the stop webs (22) form rebounding surfaces for the summits of chain links (26, 27) suspended in the connecting chain links (3).

18. Arrangement according to one of Claims 1 to 17, characterized in that the coupling elements (30) are provided with supporting surfaces (31) for bow regions of the chain links (26, 27) suspended in the connecting chain link (3).

19. Arrangement according to one of Claims 1 to 18, characterized in that the coupling elements (6, 7), for roughly adjusting the position of the connecting chain link (3), are provided with adjusting ribs (28) for that longitudinal arm (18) of the connecting chain link (3) which faces away from the conveying member (5).

20. Arrangement according to one of Claims 1 to 19, characterized in that both coupling elements (6, 7) are identically configured.

21. Arrangement according to one of Claims 1 to 20, characterized in that the base surfaces (8) of both coupling elements (6, 7) are flat and bear against a wall (4) of the respective conveying member (5).

## Revendications

1. Dispositif pour fixer un organe de transport (5) notamment un godet, à un maillon de montage (3) d'une chaîne (2) en acier rond, dans lequel la branche longitudinale (16) du maillon de montage (3) de la chaîne qui est dirigée vers l'organe de transport (5) peut être serré entre des augets de retenue (15), de deux éléments d'accouplement (6, 7) boulonnés l'un à l'autre, qui s'étendent sur la partie de la longueur de la branche longitudinale (16), ces éléments présentant des pieds (9) munis de surfaces de base (8) disposées parallèlement aux axes longitudinaux du maillon de montage (3) de la chaîne et perpendiculairement à un plan qui passe par ces axes longitudinaux, caractérisé en ce que seul l'un des éléments d'accouplement est fixé à l'organe de transport dans la région de son pied (9) qui prend appui sur l'organe de transport (5) par sa surface de base (8), et en ce que les éléments d'accouplement (6, 7), y compris les surfaces de base (8) de leurs pieds (9) sont disposés de part et d'autre du plan (19) qui passe par les milieux des branches longitudinales (16, 18) des maillons de montage (3) de la chaîne qu'ils saisissent, et la longueur (L) de la surface de base (8) au moins du pied (9) de l'élément d'accouplement (6, 7) qui est fixé à l'organe de transport (5) est au moins égale au pas (t) du maillon de montage (3) de la chaîne.

2. Dispositif selon la revendication 1, caractérisé en ce que la largeur maximum (B) de la surface de base (8) au moins du pied (9) de l'élément d'accouplement (6, 7) qui est fixé à l'organe de transport (5) est égale à l'épaisseur (d) du maillon de montage (3) de la chaîne.

3. Dispositif selon la revendication 1, caractérisé en ce que la largeur maximum (B) de la surface de base (8) au moins du pied (9) de l'élément d'accouplement (6, 7) fixé à l'organe de transport (5) est égale à 1,5 fois l'épaisseur (d) du maillon de montage (3) de la chaîne.

4. Dispositif selon une des revendications 1 à 3, caractérisé en ce que le pied (9) de l'élément d'accouplement (6, 7) qui est fixé à l'organe de transport (5) est fixé à l'organe de transport (5) par un joint soudé (10) continu ou interrompu dans la région du bord de sa surface de base (8).

5. Dispositif selon une des revendications 1 à 4, caractérisé en ce que les dimensions de la surface de base (8) des éléments d'accouplement (6, 7) associés au maillon de montage (3) sont égales.

6. Dispositif selon une des revendications 1 à 5, caractérisé en ce que les surfaces de base (8) des éléments d'accouplement (6, 7) sont espacées l'une de l'autre, considéré dans un plan s'étendant perpendiculairement au plan qui passe par les milieux des branches longitudinales (16, 18) du maillon de montage (3) de la chaîne.

7. Dispositif selon une des revendications 1 à 6, caractérisé en ce que les surfaces de base (8) des éléments d'accouplement (6, 7) occupent une position légèrement inclinée par rapport à l'axe longitudinal des augets de retenue (15).

8. Dispositif selon une des revendications 1 à 7, caractérisé en ce que les éléments d'accouplement (6, 7) prennent appui par des saillies (13, 14) sur la branche longitudinale (16) du maillon de montage (3) de la chaîne qui est dirigée vers l'organe de transport (5).

9. Dispositif selon la revendication 8, caractérisé en ce que les augets de retenue (15) sont munis de deux saillies (13, 14) équidistantes, en forme de nervures ou de côtes, qui s'étendent dans la direction longitudinale des augets.

10. Dispositif selon la revendication 9, caractérisé en ce que les saillies (13, 14) en forme de nervures ou de côtes sont interrompues dans la région du milieu des augets de retenue.

11. Dispositif selon une des revendications 1 à 10, caractérisé en ce que les éléments d'accouplement (6, 7) prennent appui l'un contre l'autre par au moins une autre saillie (20) en dehors de la région des augets de retenue (15).

12. Dispositif selon la revendication 11, caractérisé en ce que la saillie (20) située en dehors de la région des augets de retenue (15) présente la configuration d'une nervure ou d'une côte.

13. Dispositif selon la revendication 12, caractérisé en ce que la saillie (20) disposée à l'extérieur de la région des augets de retenue (15) s'étend parallèlement à l'axe longitudinal du maillon de montage (3) de la chaîne.

14. Dispositif selon une des revendications 11 à 13, caractérisé en ce que la saillie (20) disposée à l'extérieur de la région des augets de retenue (15) est située à proximité immédiate de la branche longitudinale (18) du maillon de montage (3) de la chaîne qui est éloignée de l'organe de transport (5).

15. Dispositif selon une des revendications 11 à 14, caractérisé en ce que la saillie (20) servant à donner appui aux éléments d'accouplement (6, 7) l'un par rapport à l'autre se trouve à distance du perçage (21) prévu pour le passage de la vis (11) de l'assemblage boulonné des éléments d'accouplement (6, 7).

16. Dispositif selon une des revendications 1 à 15, caractérisé en ce que les éléments d'accouplement (6, 7) sont munis de nervures de butée (22) qui interdisent les mouvements relatifs longitudinaux des augets de retenue (15), qui sont dus à la charge.

17. Dispositif selon la revendication 16, caractérisé en ce que les nernures de butée (22) forment des surfaces d'arrêt pour les sommets des maillons (26, 27) de la chaîne qui sont accrochés dans les maillons de montage (3) de la chaîne.

18. Dispositif selon une des revendications 1 à 17, caractérisé en ce que les éléments d'accouplement (30) sont munis de surfaces d'appui (31) pour les régions de tête des maillons (26, 27) de la chaîne qui sont accrochés dans le maillon de montage (3) de la chaîne.

19. Dispositif selon une des revendications 1 à 18, caractérisé en ce que, pour l'ajustement approché de la position du maillon de montage (3) de la chaîne, les éléments d'accouplement (6, 7) sont munis de nervures d'ajustement (28) pour la branche longitudinale (18) du maillon de montage (3) de la chaîne qui est éloignée de l'organe de transport (5).

20. Dispositif selon une des revendications 1 à 19, caractérisé en ce que les deux éléments d'accouplement (6, 7) sont de construction identique.

21. Dispositif selon une des revendications 1 à 20, caractérisé en ce que les surfaces de base des deux éléments d'accouplement (6, 7) sont planes et appuyées contre une paroi (4) de l'organe de transport (5) correspondant.
